# EUROPÄISCHE PATENTSCHRIFT

(11) **EP 0 437 657 B1**
(45) Veröffentlichungstag und Bekanntmachung des Hinweises auf die Patenterteilung: **27.07.1994**
(21) Anmeldenummer: 90100927.4
(22) Anmeldetag: 17.01.1990
(51) Int. Cl.: H02H 5/04, H02H 3/44

(54) **Schutzeinrichtung für elektrische Maschinen**
Protection device for an electric machine
Dispositif de protection pour une machine électrique

(43) Veröffentlichungstag der Anmeldung: 24.07.1991
(73) Patentinhaber: SIEMENS AKTIENGESELLSCHAFT, 80333 München (DE)
(72) Erfinder: Fröhlich, Paul, Dipl.-Ing., D-8458 Sulzbach-Rosenberg (DE); Zerbian, Erich, Dipl.-Ing. FH, D-8451 Fensterbach (DE); Bitterlich, Dieter, Dipl.-Ing. FH, D-8451 Ammerthal (DE)

(56) Entgegenhaltungen:
- DE-B- 1 663 122
- DE-B- 1 763 310
- US-A- 3 280 373
- US-A- 4 377 833

## Beschreibung

Die Erfindung bezieht sich auf eine Schutzeinrichtung für elektrische Maschinen mit mindestens einem Temperaturfühlerkreis, der einen oder mehrere Temperaturfühler aufweisen kann, zur Überwachung unzulässiger Maschinentemperaturen, bei der Widerstandswerte der Temperaturfühler in einer Auswerteschaltung ausgewertet und zu einer Auslösung und/oder Meldung führen.

Eine solche Schutzeinrichtung ist aus der DE-A-1 663 122 bekannt. Bei dieser Schutzeinrichtung zur Temperaturüberwachung der Wicklungen von elektrischen Maschinen und Geräten ist in die zu schützende Wicklung ein temperaturabhängiger Widerstand eingelegt, dessen Anschlüsse mit einem außerhalb der Wicklung angeordneten Widerstand zu einem Spannungsteiler zusammengefaßt sind. Dieser Spannungsteiler ist an einen Transistor angeschlossen, der ein Abschaltrelais betätigt, sobald ein Schwellwert überschritten wird. Dieser Schwellwert ist nicht einstellbar, sondern durch die Dimensionierung des Transistors und des Spannungsteilers festgelegt. Wenn zur Überwachung mehrerer Wicklungen mehrere temperaturabhängige Widerstände vorgesehen sind, ist nicht feststellbar, welche Widerstandsänderung eine etwaige Betätigung des Abschaltrelais eingeleitet hat. Hierdurch ist die Fehlerdiagnose erheblich erschwert.

Bei bekannten Schutzeinrichtungen der obengenannten Art (Siemens Schaltgeräteliste NS 2/89, Seite 5/28 bis 5/30) ist keine dynamische Drahtbrucherkennung möglich, da die Fühlerwiderstandsänderungen bei thermischen Auslösungen im M Ω Bereich liegen können. Der vorliegenden Erfindung liegt daher die Aufgabe zugrunde, eine Schutzeinrichtung zu schaffen, die eine Drahtbrucherkennung zuläßt. Dies wird auf einfache Weise dadurch erreicht, daß die Widerstandswerte des Temperaturfühlers in einer Vergleichsschaltung auf ihre zeitliche Änderung in bezug auf eine vorgegebene maximale Änderung des Widerstandwertes, die sich aus der Fühlercharakteristik und den Maschineneigenschaften ergibt, überprüft werden und daß bei Überschreitung der maximalen Änderung eine gesonderte Meldung und/oder Auslösung erfolgt.

Der Erfindung liegt die Erkenntnis zugrunde, daß bei überlastetem Motor der Widerstandsanstieg des Temperaturfühlers auf maximal 10 k Ω/s begrenzt ist. Daher geht man davon aus, daß die Widerstandsänderung des Fühlers abhängig von der Temperatur maximal 1 k Ω/°k ist. Damit ist die Spannungsänderung an einer Eingangsschaltung ausreichend, um einen Leiterbruch festzustellen. Um die Fehlerursache von der normalen Auslösung unterscheiden zu können, ist es vorteilhaft, wenn die gesonderte Meldung durch intermittierende Anzeige einer Lumineszenzdiode erfolgt.

Anhand der Zeichnung wird ein Ausführungsbeispiel gemäß der Erfindung beschrieben.

Es zeigen:

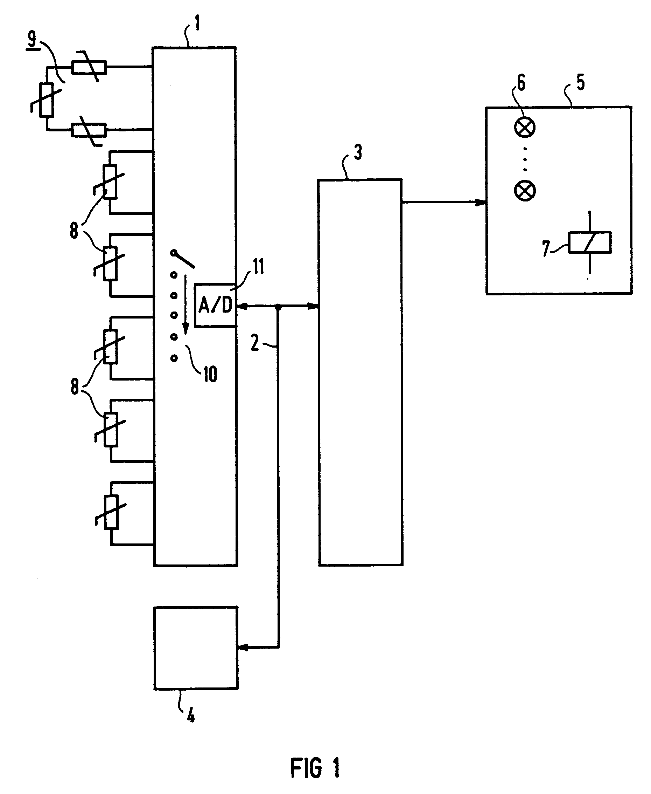

FIG 1 ein Blockschaltbild zur dynamischen Drahtbrucherkennung und
FIG 2 ein Flußdiagramm für den Ablauf der Vergleiche.

Das Blockschaltbild zeigt links das Einkoppeln der Eingangskreise über an Eingangsschaltung 1 sowie einen über eine Busleitung 2 verbundene Vergleichsschaltung 3, im Beispiel als Mikrocontroller ausgeführt, und einen nicht flüchtigen Speicher 4, beispielsweise ein E²-Speicher, der über die Busleitung 2 mit dem Mikrocontroller und mit der Eingangsschaltung 1 verbunden ist. An den Mikrocontroller 3 ist ein Ausgabebaustein 5 zur Auslösung und/oder Meldung angeschlossen. Schematisch sind hier einzelne LED 6 angedeutet und ein Auslöserelais 7, die gemeinsam oder getrennt beaufschlagt werden können. Es können ein oder mehrere Temperaturfühlerkreise 8 vorgesehen werden, die auch aus mehreren einzelnen Temperaturfühlern 9 bestehen können, wie es im oberen Teil der Eingangsschaltung 1 verdeutlicht wurde. Die einzelnen Temperaturfühlerkreise 8 werden im Beispiel über einen Multiplexer 10 an einen A/D-Wandler 11 angeschaltet, so daß die Widerstandswerte der einzelnen Temperaturfühlerkreise 8 dem Mikrocontroller 3 über den Bus 2 zur Verarbeitung zugeführt werden können.

Wird nun die Schutzeinrichtung an Spannung gelegt, so werden über den Multiplexer 10 und den A/D-Wandler 11 und den Bus 2 dem Mikrocontroller 3 die Widerstandswerte der Temperaturfühlerkreise 8 zugeführt und hier die zeitliche Änderung ausgewertet. Die vorgegebene maximale Änderung der Widerstandswerte, die sich aus der Fühlercharakteristik und den Maschineneigenschaften ergibt und die im Speicher 4 abgelegt sind, werden zum Vergleich herangezogen. Überschreiten die ermittelten Werte die maximale Änderung, so erfolgt über den Ausgabebaustein 5 eine intermittierende Anzeige über eine LED 6. Die Lage der Anzeige deutet auf den defekten Fühlerkreis hin.

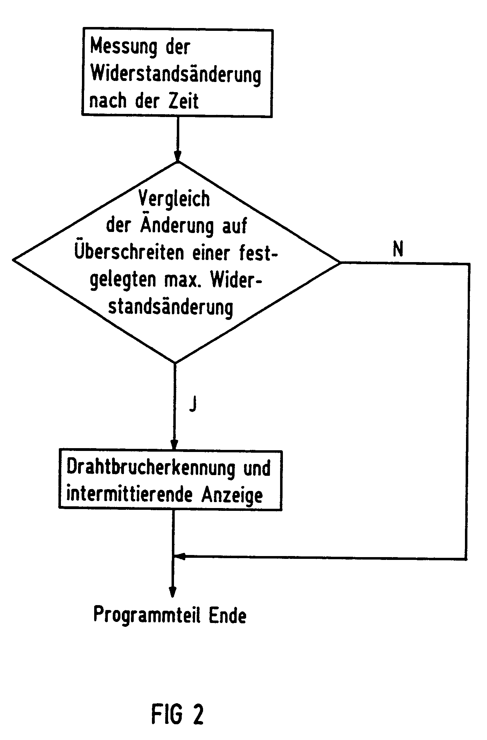

Nach dem in FIG 2 dargestellten Flußdiagramm wird zunächst die Widerstandsänderung nach der Zeit gemessen und anschließend der Vergleich der Änderung auf Überschreiten einer festgelegten, maximalen Widerstandsänderung vorgenommen. Geht der Vergleich negativ aus, so ist der Programmteil zu Ende. Ist der Vergleich mit ja zu beantworten, so wird die Drahtbrucherkennung eingeleitet und beispielsweise eine intermittierende Anzeige vorgesehen. Um Störungen auszuschalten, können hier mehrere Messungen und Vergleiche nacheinander durchgeführt werden.

## Patentansprüche

1. Schutzeinrichtung für elektrische Maschinen mit mindestens einem Temperaturfühlerkreis, der einen oder mehrere Temperaturfühler aufweisen kann, zur Überwachung unzulässiger Maschinentemperaturen, bei der Widerstandswerte der Temperaturfühler in einer Auswerteschaltung ausgewertet und zu einer Auslösung und/oder Meldung führen, **dadurch gekennzeichnet,** daß die Widerstandswerte des Temperaturfühlers (8, 9) in einer Vergleichsschaltung (3) auf ihre zeitliche Änderung in bezug auf eine vorgegebene maximale Änderung des Widerstandswertes, die sich aus der Fühlercharakteristik und den Maschineneigenschaften ergibt, überprüft werden und daß bei Überschreitung der maximalen Änderung eine gesonderte Meldung (6) und/oder Auslösung (7) erfolgt.

2. Schutzeinrichtung nach Anspruch 1, **dadurch gekennzeichnet,** daß die gesonderte Meldung (6) durch intermittierende Anzeige einer Lumineszenzdiode erfolgt.

3. Schutzeinrichtung nach Anspruch 2, **dadurch gekennzeichnet,** daß mehrere Meß- und Vergleichszyklen vorgesehen sind.

## Claims

1. A protective device for electrical machines, comprising at least one temperature-sensing circuit which can contain one or more temperature sensors for keeping a look-out for impermissible machine temperatures, the resistances measured by the temperature sensors being evaluated in an evaluation circuit and resulting in a cut-out and/or an alarm, characterised in that the resistances measured by the temperature sensor (8,9) are checked in a comparison circuit (3) to find their variation in time relative to a preset maximum change in resistance, resulting from the sensor characteristic and the properties of the machine, and if the maximum change is exceeded, a separate alarm (6) and/or cut-out (7) is the result.

2. A protective device according to Claim 1, characterised in that the separate alarm (6) is by way of an intermittent display of a light-emitting diode.

3. A protective device according to Claim 2, characterised in that a number of measurement and comparison cycles are provided.

## Revendications

1. Dispositif de protection de machines électriques, ayant au moins un circuit à sonde de température, qui peut comporter une ou plusieurs sondes de température, pour le contrôle de températures inadmissibles des machines, et dans lequel les valeurs résistives des sondes de température sont exploitées dans un circuit d'exploitation et provoquent un déclenchement et/ou une signalisation, caractérisé par le fait que la variation dans le temps des valeurs résistives de la sonde de température (8, 9) sont comparées, dans un circuit comparateur (3), à un maximum de variation prescrit de la valeur résistive, donnée par la caractéristique de la sonde et par les caractéristiques de la machine et que, si ce maximum est dépassé, il se produit une signalisation particulière (6) et/ou un déclenchement particulier (7).

2. Dispositif de protection suivant la revendication 1, caractérisé par le fait que la signalisation particulière (6) s'effectue pa la signalisation intermittente d'une diode à luminescence.

3. Dispositif de protection suivant la revendication 2, caractérisé par le fait qu'il est prévu plusieurs cycles de mesure et de comparaison.
